# DEMANDE DE BREVET EUROPEEN

(11) **EP 4 710 769 A2**
(43) Date de publication de la demande: **18.03.2026**
(21) Numéro de dépôt: 26155120.4
(22) Date de dépôt: 26.08.2016
(51) Int. Cl.: A01P 21/00

(54) **UTILISATION DE PHLOROTANNINS COMME STIMULANT DES SYMBIOSES MYCORHIZIENNE ET RHIZOBIENNE**

(30) Priorité: 26.08.2015 FR 1557940; 20.05.2016 FR 1654516
(62) Demande divisionnaire de: 16766998.5
(71) Demandeur: Agro Innovation International, 35400 Saint-Malo (FR)
(72) Inventeur: BRIAND, Xavier, décédé(e) (FR); SALAMAGNE, Sylvie, 22360 LANGUEUX (FR)
(74) Mandataire: Cabinet Beau de Loménie

(57) **Abrégé**

La présente invention concerne l'utilisation des phlorotannins, notamment extraits d'algues brunes de la famille des fucacées, notamment du genre Fucus ou Ascophyllum, pour stimuler l'absorption chez une plante d'un ou plusieurs éléments choisis parmi l'azote, le phosphore, le potassium et le calcium.

## Description

La présente invention, qui trouve application dans le domaine agricole, a essentiellement pour objet l'utilisation des phlorotannins, notamment extraits d'algues brunes, notamment de la famille des fucacées, notamment du genre Fucus ou ascophyllum, pour stimuler la symbiose entre une plante et un champignon mycorhizien.

Les phlorotannins sont un type de tannin que l'on trouve dans la paroi cellulaire des algues brunes. Ces composés sont des oligomères de phloroglucinol.

La présente invention a également pour objet des compositions fertilisantes telles que par exemple des engrais contenant ces phlorotannins ainsi qu'un procédé de traitement des plantes ou des sols les utilisant.

Dans le cadre de la présente description, on entend désigner par l'expression « composition fertilisante » tout produit dont l'emploi est destiné à assurer ou à améliorer les propriétés physiques, chimiques ou biologiques des sols ainsi que la nutrition des végétaux.

Une telle composition peut être, par exemple, un engrais appliqué par voie racinaire.

On sait que les engrais se définissent comme des matières fertilisantes dont la fonction principale est d'apporter aux plantes des éléments directement utiles à leur nutrition (éléments fertilisants majeurs, éléments fertilisants secondaires et oligo-éléments).

A cet effet, les engrais racinaires utilisent généralement des sources d'azote, de phosphore et de potassium ainsi que des oligo-éléments et des acides aminés.

Il est connu que les plantes sont capables de développer des associations symbiotiques avec des micro-organismes, pour permettre l'acquisition efficace des nutriments par la plante. Parmi les associations symbiotiques les plus économiques et les plus écologiques, on peut citer les interactions entre les plantes et les champignons mychoriziens ou entre les plantes légumineuses et les bactéries fixatrices d'azote connues sous le nom de rhizobia.

### Symbiose plante-champignons mycorhiziens

Les champignons mycorhiziens sont capables de former une étroite symbiose avec les racines des plantes . Ils s'associent à plus de 90 % des espèces de végétaux tels que les céréales, les pâtures, la pomme de terre, le maïs, le tournesol, le coton, le caféier, les arbres fruitiers, la canne à sucre, les légumineuses, les plantes ornementales. Cette symbiose est absence chez certaines espèces comme par exemple le colza, le chou et la betterave sucrière. Le résultat de l'association symbiotique entre un champignon mycorhizien et une racine de plante est appelé mycorhize.

Les champignons mycorhiziens colonisent le système racinaire de la plante. Ils sont considérés comme des extensions des racines de la plante. Ce réseau de filaments reliés aux racines de la plante sous forme de réseau agit comme des bras télescopiques puisant les nutriments du sol. Ce réseau de filaments permet à la plante d'augmenter sa capacité exploratoire racinaire et permet ainsi d'accéder aux éléments nutritifs inaccessibles par le système racinaire de la plante. La symbiose plante-champignons mycorhizien a pour conséquence une amélioration de l'efficacité des fertilisants et une réduction des pertes par lessivage ou par érosion.

En retour, la plante fournit des sucres au champignon mycorhizien nécessaires à leur croissance et à la synthèse de glomaline par le réseau de filaments du micorhize. La glomaline est une glycoprotéine qui est excrétée par le réseau de filaments et qui participe à la structuration du sol et à l'amélioration de la teneur en matière organique du sol. En effet, les champignons mycorhiziens, au travers de la production de glomaline, facilitent la phytostabilisation en créant une barrière naturelle qui induit une résistance à l'érosion et au lessivage. Elles peuvent être également utilisées pour minimiser la contamination en métaux du sol.

Les effets agronomiques associé à la stimulation de la symbiose entre une plante et un champignon mycorhizien sont multiples. La stimulation de la symbiose entre une plante et un champignon mycorhizien permet notamment :
- d'optimiser l'efficacité des fertilisants
- d'améliorer l'accessibilité aux éléments fertilisants peu mobiles comme le phosphore
- de stimuler le croissance des plantes, la floraison et/ou la fructification
- d'améliorer le rendement et la qualité de la récolte
- d'améliorer la tolérance à la salinité du sol
- d'améliorer la résistance aux stress climatiques, notamment la sécheresse ou le stress thermiques.
- de réduire la sensibilité des cultures aux pathogènes et aux nématodes réduire les pertes par lessivage et par érosion
- d'améliorer la structure du sol.

Le taux de mycorhizationd'une culture apparait comme un facteur influençant le rendement et la qualité des produits agricoles avec un impact sur la protection de l'environnement. La détermination du taux de mycorhization se fait à partir de l'observation des racines colorées et du comptage des points avec présence d'un hyphe ou à partir du comptage du nombre spores ou de clusters.

On observe aujourd'hui des taux de mycorhyzation particulièrement faibles dans le sols en raison de différentes pratiques culturales telles que l'utilisation massive d'engrais et de pesticides, la monoculture, l'absence de rotation, le développent de cultures non mycorhizées (colza, betterave sucrière, chou, ...) ou les techniques de labour intensif.

### Symbiose plante légumineuse-Rhizobiums

Les rhizobiums, ou rhizobia (genre Rhizobium), sont des bactéries aérobies du sol appartenant à la famille des Rhizobiaceae. La symbiose entre une plante légumineuse et un rhizobium est un processus indispensable à la plante pour acquérir l'azote sous forme réduite, mais aussi aux rhizobiums pour obtenir les nutriments nécessaires à leur développement. La plante légumineuse fournit des matières nutritives aux rhizobium, celle-ci capte l'azote de l'air et le donne à son hôte. Cette symbiose conduit à la formation de nouveaux organes appelés nodosités racinaires. Les nodosités racinaires sont de petites boursouflures se formant sur les racines sous l'action des Rhizobiums. Ces nodosités racinaires logent à l'intérieur des rhizobia endosymbiotiques des cellules de la plante légumineuse qui réduisent l'azote atmosphérique en ammonium. Cet azote réduit est transféré à la plante et utilisé pour sa croissance. La fixation symbiotique de l'azote améliore considérablement l'alimentation de la plante en azote. L'importance de ces rhizobiums est donc considérable puisqu'elles peuvent fixer jusqu'à 350 kg/ha/an d'azote. Comme pour la symbiose entre une plante et un champignon mycorhizes, les pratiques culturales peuvent également affecter la formation de la symbiose entre une plante légumineuse et un rhyzobium. Cela peut se traduire par une diminution de la formation des nodosités racinaires.

Il existe donc un besoin important de nouveaux produits fertilisants qui permettent de combler les carences de la plante, notamment en stimulant la symbiose entre une plante et un champignon mycorhizes et la symbiose entre une plante légumineuse et un rhyzobium.

Les algues marines constituent une ressource végétale abondante et sont depuis longtemps utilisées sur les régions côtières comme fertilisants du sol. La germination des graines, l'obtention de meilleurs rendements, une résistance aux maladies, une durée de conservation plus longue des fruits ont été mis en évidence par suite de traitements de plusieurs plantes par des extraits d'algues. Les conclusions en matière de croissance et de santé des plantes avaient essentiellement été attribuées à la richesse en bétaines, en phytohormones, polyssaccharides et en oligo-éléments des algues utilisées.

C'est dans ce contexte que le demandeur a mis en évidence, et ceci constitue le fondement de la présente invention, que les phlorotannins, notamment extraits d'algues brunes de la famille des fucacées, permettent de façon tout à fait surprenante et inattendue de stimuler les symbioses mycorhizienne et rhizobienne. Cette forte activité est soutenue par une stimulation de la sporulation et de la nodulation.

Ces phlorotannins peuvent donc être utilisés en complément dans des compositions fertilisantes telles que des engrais comme activateurs de la formation de spores et de nodules.

De telles compositions permettent une augmentation accrue de l'absorption des éléments nutritifs du sol et de la santé de la plante, répondant aux besoins de croissance de la culture qui s'exprimera notamment en terme d'amélioration de rendement et de la qualité de la récolte.

Ces compositions permettent encore d'améliorer l'efficacité de la fertilisation et de réduire les pertes par lessivage et les problèmes d'érosion.

Ainsi, selon un premier aspect, la présente demande vise à couvrir l'utilisation des phlorotannins, notamment extraits d'algues brunes de la famille des fucacées, pour stimuler la symbiose entre une plante et un champignon mycorhizien.

Les phorotannins utiles selon l'invention sont des polyphénols présents spécifiquement dans les parois cellulaires et les cellules d'algues brunes de la famille des fucacées.

Les phlorotannins représentent entre 5 et 200 mg/g du poids sec de l'algue.

Dans un mode de réalisation particulier, la plante est une plante légumineuse. Les plantes légumineuses appartiennent à la famille des Fabacées. Les plantes légumineuses jouent un rôle important dans le domaine alimentaire grâce à leur haute teneur en protéines et en acides aminés essentiels. Des exemples, non limitatifs, de plantes légumineuses sont le soja, l'arachide, le haricot, le pois, la lentille, le pois chiche, la fève, la féverole, les vesces, les gesses, la luzerne, le trèfle, le lupin, le haricot mungo (pousses de soja germé), la réglisse, le palissandre, le lotier corniculé, le sainfoin, le rooibos, le fenugrec.

Dans un mode de réalisation particulier, les phlorotannins permettent en outre de stimuler la symbiose entre une plante légumineuse et un rhizobium. De préférence la stimulation de la symbiose entre une plante légumineuse et un rhizobium s'ajoute à la stimulation de la symbiose avec un champignon mycorhizien. La présente demande vise également à couvrir l'utilisation des phlorotannins, notamment extraits d'algues brunes de la famille des fucacées, pour stimuler la symbiose entre une plante légumineuse et un rhizobium.

Avantageusement, les phlorotannins utilisés selon la présente invention sont des extraits d'algues choisis dans le groupe constitué des espèces du genre Fucus et Ascophyllum, en particulier choisis dans le groupe constitué des espèces *Fucus vesiculosus, Fucus serratus et Ascophyllum nodosum.*

Des extraits d'algues riches en phlorotannins susceptibles d'être utilisés dans le cadre de la présente invention peuvent être obtenus à partir des espèces d'algues précitées par un procédé comportant généralement les étapes suivantes : lavage, broyage, extraction (séparation solide-liquide) et éventuellement fractionnement et concentration.

L'extrait obtenu peut être plus ou moins concentré selon l'utilisation envisagée. Une déshydratation totale de cet extrait permettant une présentation sous forme pulvérulente hydrosoluble peut être obtenue, par exemple, par sécheur à tambour ou par atomisation.

Les conditions d'extraction et la nature des algues seront choisies de telle façon que l'extrait obtenu présente la concentration souhaitée dans l'application envisagée. Ces choix pourront être facilement réalisés par l'homme du métier notamment en tenant compte des indications générales qui vont suivre.

D'une façon générale la quantité de phlorotannins apportée aux plantes est de 10 à 1000 g/ha et de préférence de l'ordre de 100 g/ha pour les apports sous forme solide dans les engrais pulvérulents ou granulés.

Dans un mode de réalisation particulier, les phlorotannins permettent en outre de stimuler l'absorption chez la plante d'un ou plusieurs éléments choisis parmi l'azote, le phosphore, le potassium et le calcium. Au sens de l'invention, on entend par « stimuler l'absorption » une augmentation accrue de l'absorption, et/ou une amélioration des mécanismes d'absorption. Ainsi, dans un mode de réalisation particulier, les phlorotannins permettent en outre de stimuler les mécanismes d'absorption chez la plante d'un ou plusieurs éléments choisis parmi l'azote, le phosphore, le potassium et le calcium. Dans le cadre de la présente invention, une quantité efficace de phlorotannin est apportée à la plante pour stimuler l'absorption d'un ou plusieurs éléments choisis parmi l'azote, le phosphore, le potassium et le calcium. Ainsi, dans un mode de réalisation particulier, les phlorotannins sont apportés à la plante dans une quantité efficace pour augmenter l'absorption par la plante d'un ou plusieurs éléments susmentionnés d'au moins 5%, par exemple d'au moins 10%, d'au moins 15%, d'au moins 20%, d'au moins 25%, d'au moins 30%, d'au moins 40%, par exemple d'au moins 50%. En d'autres termes, les phlorotannins apportés à la plante permettent d'augmenter la teneur dans la plante d'un ou plusieurs éléments susmentionnés d'au moins 5%, par exemple d'au moins 10%, d'au moins 15%, d'au moins 20%, d'au moins 25%, d'au moins 30%, d'au moins 40%, par exemple d'au moins 50%.

L'augmentation de l'absorption se mesure en déterminant la teneur en azote, phosphore, potassium et/ou calcium dans la plante. Le terme « augmentation » s'entend par rapport à la plante avant l'apport en phlorotannins, par exemple par rapport à la plante n'ayant reçu aucun apport en phlorotannins. La « teneur » en azote, phosphore, potassium et/ou calcium s'exprime en w/w de masse sèche, ce qui correspond à la masse en azote, phosphore, potassium et/ou calcium contenu dans un échantillon de plante séché. La mesure de la teneur en azote, phosphore, potassium et/ou calcium est réalisée par une méthode d'analyse appropriée.

La présente invention vise également à protéger l'utilisation des phlorotannins, notamment extraits d'algues brunes de la famille des fucacées, pour stimuler l'absorption chez une plante d'un ou plusieurs éléments choisis parmi l'azote, le phosphore, le potassium et le calcium. Dans un mode de réalisation particulier, les phlorotannins sont apportés à la plante dans une quantité efficace pour augmenter l'absorption par la plante d'un ou plusieurs éléments susmentionnés d'au moins 5%, par exemple d'au moins 10%, d'au moins 15%, d'au moins 20%, d'au moins 25%, d'au moins 30%, d'au moins 40%, par exemple d'au moins 50%. En d'autres termes, les phlorotannins apportés à la plante permettent d'augmenter la teneur dans la plante d'un ou plusieurs éléments susmentionnés d'au moins 5%, par exemple d'au moins 10%, d'au moins 15%, d'au moins 20%, d'au moins 25%, d'au moins 30%, d'au moins 40%, par exemple d'au moins 50%.

Selon un deuxième aspect, la présente demande vise à protéger un procédé pour stimuler la symbiose entre une plante et un champignon mycorhizien, caractérisé en ce qu'il comprend l'application à ladite plante ou aux sols, d'une quantité efficace de phlorotannins, notamment extraits d'algues brunes de la famille des fucacées.

Dans un mode de réalisation particulier, la plante est une plante légumineuse. Ainsi, le procédé selon la présente invention permet en outre de stimuler la symbiose entre une plante légumineuse et un rhizobium. De préférence la stimulation de la symbiose entre une plante légumineuse et un rhizobium s'ajoute à la stimulation de la symbiose avec un champignon mycorhizien.

La présente demande vise également à couvrir un procédé pour stimuler la symbiose entre une plante légumineuse et un rhizobium, caractérisé en ce qu'il comprend l'application à ladite plante ou aux sols, d'une quantité efficace de phlorotannins, notamment extraits d'algues brunes de la famille des fucacées.

Avantageusement, l'application aux plantes sera réalisée par voie racinaire.

La quantité efficace de phlorotannins apportée aux plantes est de de 0,1 g à 100 g par litre et préférentiellement de l'ordre de 5 g par litre pour les apports sous forme liquide dans les solutions nutritives racinaires (hydroponie, goutte à goutte, ...) ou bien encore de 10 à 1000 g/ha et préférentiellement de l'ordre de 100 g/ha pour les apports sous forme solide dans les engrais pulvérulents ou granulés.

Dans un mode de réalisation particulier, les phlorotannins permettent en outre de stimuler l'absorption chez la plante d'un ou plusieurs éléments choisis parmi l'azote, le phosphore, le potassium et le calcium.

La présente invention vise également à protéger un procédé pour stimuler l'absorption chez une plante d'un ou plusieurs éléments choisis parmi l'azote, le phosphore, le potassium et le calcium, caractérisé en ce qu'il comprend l'application à ladite plante ou aux sols, d'une quantité efficace de phlorotannins, notamment extraits d'algues brunes de la famille des fucacées.

Dans un mode de réalisation particulier, les phlorotannins sont appliqués à la plante ou aux sols dans une quantité efficace pour augmenter l'absorption par la plante d'un ou plusieurs éléments susmentionnés d'au moins 5%, par exemple d'au moins 10%, d'au moins 15%, d'au moins 20%, d'au moins 25%, d'au moins 30%, d'au moins 40%, par exemple d'au moins 50%. En d'autres termes, les phlorotannins appliqués à la plante ou aux sols permettent d'augmenter la teneur dans la plante d'un ou plusieurs éléments susmentionnés d'au moins 5%, par exemple d'au moins 10%, d'au moins 15%, d'au moins 20%, d'au moins 25%, d'au moins 30%, d'au moins 40%, par exemple d'au moins 50%. Selon un troisième aspect, la présente demande vise à protéger un produit fertilisant, caractérisé en ce qu'il comprend une quantité efficace de phlorotannins, notamment extraits d'algues brunes de la famille des fucacées, éventuellement en association avec une ou plusieurs matières fertilisantes. Avantageusement, le produit fertilisant est caractérisé en ce qu'il se présente :
- soit sous forme liquide et en ce qu'il contient une quantité de phlorotannins de 0,1 à 100 g par litre, et de préférence de l'ordre de 5 g par litre ;
- soit sous forme solide notamment sous forme de poudre ou de granulés et en ce qu'il contient une quantité de phlorotannins permettant un apport de 10 à 1000 g et de préférence de l'ordre de 100 g par hectare.

Avantageusement, le produit fertilisant selon l'invention se présente sous différentes formes, comme par exemple :
- un amendement, notamment amendement calcaire ou amendement organique
- un engrais, notamment un engrais racinaire
- une solution nutritive, notamment une solution nutritive racinaire.

Dans un mode de réalisation particulier, le produit fertilisant comprend une quantité efficace de phlorotannins, notamment extraits d'algues brunes de la famille des fucacées, en association avec une ou plusieurs matières fertilisantes. Avantageusement, la matière fertilisante est une source de calcium, notamment du carbonate de calcium, du sulfate de calcium, du gypse et/ou du phosphogypse. En particulier, l'association des phlorotannins et de la source de calcium , notamment le carbonate de calcium, permet de stimuler de façon optimale la symbiose entre la plante et le champignon mycorhizes.

A titre d'exemples de produits fertilisants conformes à l'invention, on citera les amendements calcaires, les amendements organiques et les supports de culture, les engrais racinaires de type NP, PK, NPK, etc., ou encore les solutions nutritives racinaires.

Les substances fertilisantes susceptibles d'être utilisées en association avec les phlorotannins peuvent être de natures variées et choisies par exemple parmi l'urée, le sulfate d'ammonium, le nitrate d'ammonium, le phosphate naturel, le chlorure de potassium, le nitrate de magnésium, le nitrate de manganèse, le nitrate de zinc, le nitrate de cuivre, l'acide phosphorique, l'acide borique.

La présente invention trouve application dans le traitement d'une très grande variété de plantes.

Parmi celles-ci, on citera en particulier :
- les plantes de grande culture telles que les céréales (blé, maïs, canne à sucre, ...),
- les protéagineux (pois),
- les oléagineux (soja, tournesol),
- la vigne
- les plantes prairials utiles pour l'alimentation animale,
- les cultures spécialisées telles qu'en particulier le maraîchage (laitue, épinards, tomate, melon), la vigne, l'arboriculture (oranger, poire, pomme, nectarine), ou l'horticulture (rosiers).

Par l'expression "plante" on entend désigner dans la présente demande la plante considérée dans son ensemble, incluant son appareil racinaire, son appareil végétatif, les graines, semences et fruits.

La présente invention sera maintenant illustrée par les exemples non limitatifs suivants.

Dans ces exemples, et sauf indication contraire, les pourcentages sont exprimés en poids et la température est la température ambiante.

### EXEMPLE 1 - Procédé de préparation de phlorotannins utilisable dans le cadre de l'invention

### A - Description générale

### a) Préparation d'un extrait de phlorotannins à partir d'Ascophyllum nodosum

La fraction de phlorotannins a été obtenue par extraction aqueuse d'algues fraîches (200 g d'Ascophyllum nodosum par litre d'eau).

L'extraction est une hydrolyse acide (pH 3) qui a été réalisée sous agitation pendant 48h, avec 1h de chauffage à 90-100 °C. L'extrait a été ensuite filtré sur une membrane (80 µm de porosité).

### b) Préparation d'un extrait de phlorotannins à partir de Fucus vesiculosus

La fraction phlorotannins a été obtenue par extraction aqueuse d'algues fraîches (200 g de Fucus vesiculosus par litre d'eau).

L'extraction est une hydrolyse acide (pH 3) qui a été réalisée sous agitation pendant 48h à température ambiante. L'extrait a été ensuite filtré sur une membrane (80 µm de porosité). Le solvant (eau) a été évaporé pour obtenir une poudre hydrosoluble.

### B - Exemple détaillé de préparation d'un extrait de phlorotannins :

Un extrait *de phlorotannins* a été obtenu en suivant le protocole expérimental suivant :

### a) Lavage

Des algues fraîches de type *Ascophyllum nodosum ou Fucus vesiculosus* ont été soumises à deux lavages successifs dans un bac d'eau afin d'éliminer le sable et les graviers.

### b) Broyage

Les algues ainsi lavées ont été égouttées puis broyé en morceaux de 1 à 10 mm.

### c) Extraction

200 kg d'algues ont été dispersés dans un réacteur chauffant contenant 1000 kg d'une solution aqueuse maintenue à température ambiante (Fucus Vesiculosus) ou portée à une température de 90°C (Ascophyllum nodosum). L'ensemble a été maintenu sous agitation pendant une durée d'environ 48 heures et 2 heures, respectivement.

Préalablement à l'extraction, les cellules algales déjà broyées ont été micro-éclatées au moyen d'un homogénéisateur de type ULTRA-TURAX^{®} afin de favoriser l'extraction. L'opération de séparation intervient à l'issue des étapes d'extraction.

### d) Séparation

La fraction soluble riche en phlorotannins a été séparée des débris d'algues par centrifugation (séparation solide-liquide).

L'extrait centrifugé a ensuite été filtré soit sur un filtre à terre de diatomées, soit sur un filtre à plateaux, puis à nouveau filtré sur une membrane jusqu'à 1 µm.

Le filtrat ainsi obtenu comprend entre 0.1 et 10 % en poids d'extrait sec.

L'extrait ainsi préparé peut être utilisé sous une forme plus ou moins concentrée, la concentration finale étant déterminée en fonction de la teneur recherchée en dérivés actifs dans l'application envisagée.

Ainsi, le filtrat mentionné précédemment peut être concentré, par exemple, au moyen d'un évaporateur à flot tombant, de façon à ce que l'extrait sec représente de 10 à 60 % en poids de celui-ci.

Une déshydratation totale peut également être obtenue, par exemple, par sécheur à tambour ou par atomisation lorsque l'on recherche une présentation sous forme pulvérulente hydrosoluble.

En procédant comme décrit ci-dessus, il a été préparé divers extraits de phlorotannins à partir de 2 espèces d'algues brunes des genres *Ascophyllum* ou *Fucus.* La composition de ces extraits de phlorotannins secs est présentée dans le tableau 1 ci-après.

**TABLEAU 1 : Composition des extraits de phlorotannins d'algues brunes**

| ALGUE | Teneur en Phlorotannins (% extrait sec) |
|---|---|
| FUCUS vesiculosus | 22,8 |
| ASCOPHYLLUM nodosum | 15, 3 |

### EXEMPLE 2 - Effets d'un extrait de phlorotannins sur la sporulation de Rhizophagus intraradices et sur la production de biomasse chez le maïs

Des graines de maïs pré-germées ont été semées en pot de 0,9 L, à raison d'une graine par pot. Les pots ont été au préalable rempli avec un support de culture inoculé avec un champignon mycorhizien, *Rhizophagus intraradices.* Les plants ont été cultivés pendant 8 semaines en conditions contrôlées. Les plants ont été arrosés 3 fois par semaine à l'eau osmosée pour la modalité témoin et à l'eau osmosée la première semaine puis avec l'extrait de phlorotannins fabriqué selon l'exemple 1 dilué dans l'eau (à raison de 100 g/ha de phorotannins) pour la modalité traité. Le témoin et la modalité ont été arrosés avec de l'eau osmosée pendant la première semaine. A partir de la seconde semaine l'eau osmosée a été remplacé par l'extrait de phlorotannins. L'apport d'engrais a été fait à partir de la troisième semaine avec un engrais 15/3/25, correspondant à la teneur en Azote/Phosphore/Potassium respectivement, à raison d'un apport par semaine dans l'eau d'arrosage. Deux extraits de phlorotannins ont été testés : un issu d'Ascophyllum nodosum (Extrait AN) et un autre issu de Fucus vesiculosus (Extrait FV).

Les contrôles de la sporulation de *Rhizophagus intraradices* ont été réalisés après 6 et 8 semaines de culture. Pour chaque contrôle, 5 plants par modalité ont été analysés. Pour chaque plant, le matériel fongique a été extrait. Les grappes de spores ont été dénombrés sous loupe binoculaire.

Pour l'extrait FV, des mesures de biomasses aériennes et racinaires des plants de maïs ont été réalisées après 8 semaines de culture. 5 plants par modalité ont été analysés.

Les deux extraits de phlorotannins ont un effet significatif sur le nombre de grappes de spores et le nombre de spores par grappes de Rhizophagus intraradices. L'application de l'extrait FV permet également une augmentation de la matière fraîche des parties aériennes et racinaires des plants de maïs.

**TABLEAU 2 : Effet de 2 extraits de phlorotannins sur le nombre de grappes de spores de Rhizophagus intraradices**

| | **Nombre moyen de grappes de spores par plant** | | | |
|---|---|---|---|---|
| | **Extrait FV** | | **Extrait AN** | |
| | **6 semaines** | **8 semaines** | **6 semaines** | **8 semaines** |
| *Témoin* | 28 | 60 | 28 | 60 |
| *Traité* | 73 | 205 | 114 | 191 |
| *Indice* | 260,7 % | 341,7 % | 407,1 % | 318,3 % |

Les résultats présentés dans le tableau 2 montrent une nette augmentation du nombre moyen de grappes de spores pour les plantes traitées avec les phlorotannins, comparé aux plantes témoins.

**TABLEAU 3 : Effet d'un extrait de phlorotannins issu de Fucus vesiculosus sur le nombre de spores par grappes de Rhizophagus intraradices**

| | | **<10** | **10-19** | **20-29** | **30-39** | **40-49** | **>50** |
|---|---|---|---|---|---|---|---|
| 6 semaines | *Témoin* | 37 | 27 | 17 | 11 | 3 | 5 |
| | *Traité* | 28 | 45 | 14 | 8 | 4 | 1 |
| *8 semaines* | *Témoin* | 50 | 27 | 11 | 8 | 1 | 3 |
| | *Traité* | 35 | 43 | 12 | 8 | 0 | 2 |

Les résultats présentés dans le tableau 3 montrent une augmentation du nombre de grappes avec plus de 10 spores pour les plantes traitées avec les phlorotannins issus de *Fucus vesiculosus,* comparé aux plantes témoins.

**TABLEAU 4 : Effet d'un extrait de phlorotannins issu d'Ascophyllum nodosum sur le nombre de spores par grappes de Rhizophagus intraradices**

| | | **<10** | **10-19** | **20-29** | **30-39** | **40-49** | **>50** |
|---|---|---|---|---|---|---|---|
| 6 semaines | *Témoin* | 37 | 27 | 17 | 11 | 3 | 5 |
| | *Traité* | 16 | 42 | 19 | 7 | 7 | 9 |
| *8 semaines* | *Témoin* | 50 | 27 | 11 | 8 | 1 | 3 |
| | *Traité* | 31 | 45 | 13 | 6 | 1 | 4 |

Les résultats présentés dans le tableau 4 montrent une augmentation du nombre de grappes avec plus de 10 spores pour les plantes traitées avec les phlorotannins issus de *Ascophyllum nodosum,* comparé aux plantes témoins.

**TABLEAU 5 : Effet d'un extrait de phlorotannins issu de Fucus vesiculosus sur la croissance des plants de maïs**

| | **Témoin** | **Traité** |
|---|---|---|
| Poids frais moyens des parties aériennes (en g) | 14,84 | 25,03 |
| *Poids secs moyens des parties aériennes (en g)* | 1,63 | 2,75 |
| *Poids frais des parties racinaires (en g)* | 3,33 | 4,49 |

Les résultats présentés dans le tableau 5 montrent que les plantes traitées avec les phlorotannins issus de *Fucus vesiculosus* se sont développées plus rapidement, à la fois pour les parties aériennes et les parties racinaires, par rapport aux plantes témoins.

Les résultats présentés dans cet exemple montrent clairement que les phlorotannins ont permis de stimuler fortement la symbiose entre les plants de maïs et *Rhizophagus intraradices* et ainsi de stimuler la croissance de la plante.

### EXEMPLE 3 - Effet d'un extrait de phlorotannins de Fucus vesiculosus sur la teneur en éléments minéraux des parties aériennes de plants de maïs

Des graines de maïs pré-germées ont été semées en pot de 0,9 L, à raison d'une graine par pot. Les pots ont été au préalable rempli avec un support de culture inoculé avec un champignon mycorhizien, *Rhizophagus intraradices.* Les plants ont été cultivés pendant 8 semaines en conditions contrôlées. Les plants ont été arrosés 3 fois par semaine à l'eau osmosée pour la modalité témoin et à l'eau osmosée la première semaine puis avec l'extrait de phlorotannins issu de Fucus vesiculosus (fabriqué selon l'exemple 1) dilué dans l'eau (à raison de 100 g/ha de phorotannins) pour la modalité traitée. Le témoin et la modalité traitée ont été arrosés avec de l'eau osmosée pendant la première semaine. A partir de la seconde semaine l'eau osmosée a été remplacé par l'extrait de phlorotannins pour la modalité traitée. L'apport d'engrais a été fait à partir de la troisième semaine avec un engrais 15/3/25, correspondant à la teneur en Azote/Phosphore/Potassium respectivement, à raison d'un apport par semaine dans l'eau d'arrosage.

Les teneurs en azote, phosphore, potassium et calcium des parties aériennes des plants de maïs ont été mesurées après 8 semaines de culture. Cinq plants par modalité ont été utilisés. Avant analyses, les parties aériennes ont été séchées à l'étuve puis broyées. La teneur en azote total a été mesurée suivant le principe de la méthode de dumas, qui consiste en une combustion à 1200°C sous oxygène , une purification des gaz de combustion, une transformation des oxydes d'azote produits en azote élémentaire et un, dosage du N élémentaire par catharométrie. Les teneurs en phosphore total, en potassium total et en calcium total ont été mesurées par minéralisation par voie sèche (selon méthode de Maurice Pinta, spectromètrie d'absorption atomique : application à l'analyse chimique, 1979). L'échantillon de végétal sec et broyé est calciné dans un four à moufle, puis les cendres sont reprises par l'acide chlorhydrique concentré. L'extrait est évaporé à sec puis repris par l'acide chlorhydrique dilué. Le dosage est réalisé sur l'extrait dilué et volumé par spectrométrie d'émission plasma optique (ICP AES).

L'application de l'extrait FV permet une augmentation de la teneur en azote, phosphore, potassium et calcium des parties aériennes des plants de maïs.

**TABLEAU 6 : Effet d'un extrait de phlorotannins de Fucus vesiculosus sur la teneurs en éléments minéraux des parties aériennes de plants de maïs.**

| **Eléments (% w/w de masse sèche)** | **Témoin** | **Extrait FV** |
|---|---|---|
| Azote total | 2,97 | 3,4 |
| Phosphore total | 0,19 | 0,25 |
| Potassium total | 4,69 | 4,99 |
| Calcium total | 0,43 | 0,49 |

Les résultats présentés sont exprimés en pourcentage de la masse de l'élément minéral par rapport à la masse sèche (% w/w de masse sèche), par exemple en gramme d'élément minéral/100g de masse sèche. Ici, cela correspond au pourcentage en azote, phosphore, potassium et calcium dans un échantillon séché de parties aériennes de plants de maïs. Les résultats présentés dans le tableau 6 montrent une augmentation de la teneur en éléments minéraux (azote, phosphore, potassium et calcium) des parties aériennes des plantes traitées avec les phlorotannins issus de Fucus vesiculosus par rapport aux plantes témoins.

### EXEMPLE 4 - Effets d'un extrait de phlorotannins sur la formation des nodules Rhizobiens

L'expérimentation a été réalisée sur du pois fourrager variété *Solara.* Le pois fourrager a été semé à raison de 15 graines par pot, équivalent à une densité de semis de 590 graines/m². Les pots contiennent un mélange de tourbe enrichie, de terre et de sable (1/3, 1/3, 1/3). Chaque modalité est constituée de 8 pots.

Un support inerte sur lequel a été ajouté l'extrait de phlorotannins fabriqué selon l'exemple 1 à partir de *Fucus vesiculosus* a été mélangé au sol à raison de 100 kg/ha (ce qui équivaut à 100 g/ha de phlorotannins). Pour le témoin l'extrait a été remplacé par de l'eau. Les cultures ont été conduites pendant 5 semaines. Après 5 semaines de culture, le nombre de nodules et la teneur en matière sèche des parties aériennes ont été déterminées.

On observe une augmentation du nombre de nodules de 37 % par rapport au témoin. Dans le même temps, la production de matière sèche des parties aériennes est augmentée de 9 % par rapport au témoin.

**Tableau 7 : Effets d'un extrait de phlorotannins sur la formation de nodules**

| | **Nombre de nodules** | **% Témoin** | **MS parties aériennes** | **% Témoin** |
|---|---|---|---|---|
| Témoin | 29 | | 0,43 q | |
| Extrait | 40 | + 37 % | 0,47 g | + 9 % |

| | | | | |
|---|---|---|---|---|
| MS : Matière sèche | | | | |

Les résultats présentés dans cet exemple montrent clairement que les phlorotannins ont permis de stimuler fortement la symbiose entre les plans de maïs et un *Rhhizobium* et ainsi de stimuler la croissance de la plante.

### EXEMPLE 5 - Effets d'un extrait de phlorotannins sur le rendement du blé.

L'essai a été réalisé sur du blé variété Altria, semé à une densité de 160 kg/ha.

Le dispositif expérimental comprend des modalités à 4 répétitions.

Chaque parcelle élémentaire mesure 7m x 2m, soit une surface de 14 m². La fertilisation azotée (165 U, dose légèrement limitante X-10%) a été fractionnée en 3 apports d'ammonitrate 33,5. Les apports ont été effectués au stade tallage (55 U), épi 1 cm (85 U) et dernière feuille visible (25 U).

L'extrait de phlorotannins fabriqué selon l'exemple 1 à partir de *Ascophyllum nodosum* a été appliqué au stade mi-épiaison à raison de 150g/ha.

Le sol était de type Limon argilo-sableux avec un pH à 8,1.

**Tableau 8 : Effets d'un extrait de phlorotannins issus de Ascophyllum nodosum sur le rendement du blé**

| | **Rendement à 14,5 % (q/ha)** | **% Témoin** |
|---|---|---|
| Témoin | 60,11 | |
| Extrait | 66,32 | + 10,3 % |

Le rendement est exprimé par rapport à un taux de matière sèche de 14,5%.
q/ha : quintaux par hectare

L'extrait de phlorotannins permet une amélioration du rendement de 6,2 q/ha, soit une augmentation de 10,3 %.

### EXEMPLE 6 - Effets d'un extrait de phorotannins sur la fructification du soja

L'expérimentation a été réalisée sur une culture de soja. Le soja a été semé à une densité de 70 grains/m².

L'extrait de phlorotannins fabriqué selon l'exemple 1 à partir de Fucus vesiculosus a été appliqué à raison de 100g/ha à deux stades (2-3 feuilles et début floraison).

Les résultats sont présentés dans le tableau 9.

**Tableau 9 : Effets d'un extrait de phlorotannins sur le nombre de gousses**

| | **Gousses** / **plante** | **% Témoin** | **MS / plante (g)** | **% Témoin** |
|---|---|---|---|---|
| Témoin | 7,17 | | 11,30 | |
| Extrait | 8,26 | + 15,2 % | 12,26 | + 8,5 % |

| | | | | |
|---|---|---|---|---|
| MS = Masse sèche | | | | |

L'extrait de phlorotannins favorise le développement végétatif de la plante ainsi que la formation de gousses.

### EXEMPLE 7 - Effets d'un extrait de phlorotannins sur la production et la qualité des poires

L'essai a été réalisé sur un verger de poirier de la variété Williams planté à une densité de 3000 arbres par hectare. Le verger a été conduit en haie fruitière.

Les modalités sont composées de 4 parcelles élémentaires, correspondant chacune à un rang de 5 arbres.

L'extrait de phlorotannins fabriqué selon l'exemple 1 à partir de *Fucus vesiculosus* a été apporté à raison de 300 g/ha au début du stade floraison, le taux de fleurs ouvertes a été estimé supérieur à 3%.

La récolte des poires a été réalisée sur 4 arbres par parcelle élémentaire, soit 16 arbres par modalité. L'arbre de bordure situé entre 2 traitements n'a pas été pris en compte. Afin de déterminer le poids moyen d'un fruit, 100 fruits par répétition ont été pesés. La détermination de la fermeté a été réalisée sur 20 fruits par répétition. La fermeté a été déterminée à l'aide d'un pénétromètre qui mesure la force nécessaire pour faire pénétrer un cylindre métallique dans le fruit. Dans cet essai, le cylindre métallique est un embout mobile de 0,5 cm². Les résultats ont donc été exprimés en kg/0,5 cm²et sont présentés dans le tableau 10.

**Tableau 10 : Effets d'un extrait de phlorotannins sur la production de poires**

| | **Récolte (kg)** | **% Témoin** | **Poids moyen de 100 fruits (kg)** | **Fermeté de 20 fruits(kg)_** |
|---|---|---|---|---|
| Témoin | 148 | | 23,7 | 8,0 |
| Extrait | 157,2 | + 6,2 % | 24,6 | 8,2 |

On observe une augmentation de 6,2% du rendement, avec une légère supériorité sur le plan qualitatif (poids moyen et fermeté des fruits), pour les poiriers traités avec l'extrait de phlorotannins.

### EXEMPLE 8 - Effets d'un extrait de phlorotannins sur la production de melon

L'expérimentation s'est déroulée dans un tunnel chauffé et irrigué avec un paillage plastique du sol. Les plants en mottes de melons (variété Preco greffés sur porte-greffer Tézier), élevés en pépinière, ont été repiqués au stade 2 feuilles vraies.

La conduite des plants s'est effectuée sur 2 rameaux primaires. Ceux-ci ont été étêtés à environ 8 étages foliaires. Puis les rameaux secondaires formés ont été taillés à 2 étages de feuilles.

Chaque parcelle élémentaire comporte 15 plants sur un rang. Les modalités sont composées de 4 répétitions.

L'extrait de phlorotannins fabriqué selon l'exemple 1 à partir de *Ascophyllum nodosum* a été apporté à raison de 100g/ha.

Les résultats sont présentés dans le tableau 11.

**Tableau 11 : Effets d'un extrait de phlorotannins sur la production de melons**

| | **Poids cumulé (kg/60 plants)** | **% Témoin** | **Nb cumulés (/60 plants)** | **% Témoin** |
|---|---|---|---|---|
| Témoin | 255 | | 426 | |
| Extrait | 294,1 | + 15,3 % | 500 | 17,4 % |

Les résultats montrent que les melons traités avec l'extrait de phlorotannins ont présenté une plus grande précocité de la production. De plus, les récoltes ont été plus importantes dès les premiers jours et le différentiel s'est maintenu jusqu'au dernier jour de récolte avec une augmentation de 15,3% du poids cumulé et de 17,4% du nombre de melons.

### EXEMPLE 9 - Exemples de formulations incorporant des extraits de phlorotannins

On donnera ci-après à titre d'exemples, divers produits fertilisants utilisables selon l'invention avec des indications sur les conditions de leur mise en œuvre.

### A - AMENDEMENTS

### a) AMENDEMENT CALCAIRE

| Amendement 1 | |
|---|---|
| Lithothamnium | 1000 kg |
| Extrait de phlorotannins | QSP 200 g/ha |
| Dose d'apport 1 T/ha | |

| Amendement 2 | |
|---|---|
| Carbonate de calcium | 1000 kg |
| Extrait de phlorotannins | QSP 1000 g/ha |
| Dose d'apport 1 T/ha | |

| Amendement 3 | |
|---|---|
| Gypse | 1000 kg |
| Extrait de phlorotannins | QSP 1000 g/ha |
| Dose d'apport 1 T/ha | |

| | |
|---|---|
| T/ha : tonnes par hectare | |

### b) AMENDEMENT ORGANIQUE ET SUPPORTS DE CULTURE

| | |
|---|---|
| Terreau | 500 kg |
| Tourbe | 500 kg |
| Extrait de phlorotannins | QSP 500 g/ha |
| Dose d'apport 1T/ha | |

### B - ENGRAIS RACINAIRES

| a) ENGRAIS NP | |
|---|---|
| Lithothamnium | 310 kg |
| Chlorure de potassium | 167 kg |
| Urée | 161 kg |
| Sulfate d'ammoniaque | 362 kg |
| Extrait de phlorotannins | QSP 200 g/ha |

| CULTURES | DOSE D'APPORT (kg/ha) |
|---|---|
| Pâtures Céréales Maïs | 200 - 400 |

### b) ENGRAIS NPK + MqO

| | |
|---|---|
| Lithothamnium | 158 kg |
| Phosphate d'ammoniaque | 116 kg |
| Sulfate d'ammoniaque | 186 kg |
| Urée | 156 kg |
| Oxyde de magnésium | 50 kg |
| Chlorure de potassium | 334 kg |
| Extrait de phlorotannins | QSP 1000 g/ha |

| CULTURES | DOSE D'APPORT (kg/ha) |
|---|---|
| Maïs Céréales Prairies Toutes cultures | 400 - 800 |

### C - SOLUTIONS NUTRITIVES RACINAIRES (HYDROPONIE, GOUTTE A GOUTTE)

### a) SOLUTION NPK Mg

| | |
|---|---|
| Nitrate de potassium | 50 g/L |
| Phosphate de potassium | 27 g/L |
| Sulfate de magnésium | 49 g/L |
| Extrait de phlorotannins | 200 g/L (ie. 1g/L de solution finale appliquée sur la plante) |

Dilution 1 L pour 200 L d'eau

### b) SOLUTION N Ca Mg

| | |
|---|---|
| Calcium nitrate | 118 g/L |
| Chelate de fer | 5 g/L |
| Extrait de phlorotannins solution finale appliquée sur la plante) | 100 g/L (ie. 0,5 g/L de |

Dilution 1 L pour 200 L d'eau

## Revendications

1. Utilisation d'un extrait d'algues brunes de la famille des fucacées contenant des phlorotannins pour stimuler la symbiose entre une plante et un champignon mycorhizien.

2. Utilisation selon la revendication 1, **caractérisée en ce que** la plante est une plante légumineuse.

3. Utilisation selon l'une des revendications 1 ou 2, **caractérisée en ce que** l'extrait d'algues permet en outre (i) de stimuler la symbiose avec un rhizobium et/ou (ii) de stimuler l'absorption chez la plante d'un ou plusieurs éléments choisis parmi l'azote, le phosphore, le potassium et le calcium.

4. Utilisation selon l'une des revendications 1 à 3, **caractérisée en ce que** l'extraits d'algue est :
(i) un extrait d'algues du genre Fucus, par exemple un extrait d'algues de l'espèce *Fucus vesiculosus* ou un extrait d'algues de l'espèce *Fucus serratus ;* ou
(ii) un extrait d'algues du genre Ascophyllum, par exemple un extrait d'algues de l'espèce *Ascophyllum nodosum.*

5. Utilisation selon l'une des revendications 1 à 4, **caractérisée en ce que** l'extrait d'algues est obtenu par un procédé comportant les étapes suivantes : lavage, broyage, extraction (séparation solide-liquide) et éventuellement fractionnement et concentration.

6. Utilisation selon l'une des revendications 1 à 5, **caractérisée en ce que** les phlorotannins sont apportés à la plante :
- soit sous forme liquide dans des solutions nutritives racinaires en une quantité de 0,1 à 100 g par litre, et de préférence de l'ordre de 5 g par litre,
- soit sous forme solide, par exemple, dans des engrais pulvérulents ou granulés en une quantité de 10 à 1000 g et de préférence de l'ordre de 100 g par hectare.

7. Procédé pour stimuler la symbiose entre une plante et un champignon mycorhizien, **caractérisé en ce qu'**il comprend l'application, de préférence par voie racinaire, à ladite plante ou aux sols, d'une quantité efficace d'un extrait d'algues brunes de la famille des fucacées contenant des phlorotannins.

8. Procédé selon la revendication 7, **caractérisé en ce que** la plante est une plante légumineuse.

9. Procédé selon l'une des revendications 7 ou 8, **caractérisé en ce qu'**il permet en outre (i) de stimuler la symbiose avec un rhizobium et/ou (ii) de stimuler l'absorption chez la plante d'un ou plusieurs éléments choisis parmi l'azote, le phosphore, le potassium et le calcium.

10. Procédé selon l'une des revendications 7 à 9, **caractérisé en ce que** les phlorotannins sont utilisés en une quantité :
- de 0,1 à 100 g par litre, et de préférence de l'ordre de 5 g par litre pour les apports sous forme liquide dans des solutions nutritives racinaires,
- de 10 à 1000 g et de préférence de l'ordre de 100 g par hectare pour les apports sous forme solide, par exemple, dans des engrais pulvérulents ou granulés.

11. Procédé selon l'une des revendications 7 à 10, **caractérisée en ce que** l'extraits d'algues est
(i) un extrait d'algues du genre Fucus, par exemple un extrait d'algues de l'espèce *Fucus vesiculosus* ou un extrait d'algues de l'espèce *Fucus serratus ;* ou
(ii) un extrait d'algues du genre Ascophyllum, par exemple un extrait d'algues de l'espèce *Fucus serratus* ou un extrait d'algues de l'espèce *Ascophyllum nodosum.*

12. Utilisation des phlorotannins, notamment extraits d'algues brunes de la famille des fucacées, pour stimuler l'absorption chez une plante d'un ou plusieurs éléments choisis parmi l'azote, le phosphore, le potassium et le calcium.

13. Utilisation selon la revendication 12, **caractérisée en ce que** les phlorotannins précités sont extraits d'algues choisies dans le groupe constitué des espèces du genre Fucus ou Ascophyllum.

14. Utilisation selon l'une des revendications 12 ou 13, **caractérisée en ce que** les extraits précités sont obtenus par un procédé comportant généralement les étapes suivantes : lavage, broyage, extraction (séparation solide-liquide) et éventuellement fractionnement et concentration.

15. Utilisation selon l'une des revendications 12 à 14, **caractérisée en ce que** les phlorotannins sont apportés à la plante :
- soit sous forme liquide dans des solutions nutritives racinaires en une quantité de 0,1 à 100 g par litre, et de préférence de l'ordre de 5 g par litre,
- soit sous forme solide, par exemple, dans des engrais pulvérulents ou granulés en une quantité de 10 à 1000 g et de préférence de l'ordre de 100 g par hectare.
